# EUROPÄISCHE PATENTSCHRIFT

(11) **EP 1 156 259 B1**
(45) Veröffentlichungstag und Bekanntmachung des Hinweises auf die Patenterteilung: **16.11.2005**
(21) Anmeldenummer: 01117901.7
(22) Anmeldetag: 28.04.1998
(51) Int. Cl.: F16L 33/08

(54) **Schlauchschelle**
Hose clamp
Collier de serrage

(30) Priorität: 03.05.1997 DE 19718776
(43) Veröffentlichungstag der Anmeldung: 21.11.2001
(62) Teilanmeldung aus: 98107694.6
(73) Patentinhaber: Hans Oetiker AG Maschinen- und Apparatefabrik, 8812 Horgen (CH)
(72) Erfinder: Allert, Kurt, 78727 Oberndorf A. N. (DE)
(74) Vertreter: Strehl Schübel-Hopf & Partner

(56) Entgegenhaltungen:
- GB-A- 536 267
- US-A- 2 268 211

## Beschreibung

Die Erfindung betrifft eine Schlauchschelle gemäß Oberbegriff des Anspruchs 1. Eine solche Schlauchschelle ist aus der GB 2 246 160 A, der GB 536 267 A und der US 2 268 211A bekannt.

Derartige Schlauchschellen werden auf verschiedenen technischen Gebieten für Spannaufgaben eingesetzt. Das schlaufenartig ausgebildete Spannband weist in einem Endbereich Mitnahmeausnehmungen auf, in die eine in einem Spanngehäuse der Schlauchschelle drehbar gelagerte Spannschnecke eingreift. Der andere Endbereich des Spannbandes ist am Spanngehäuse befestigt. Wird die Spannschnecke zum Beispiel mit einem Spannwerkzeug, insbesondere mit einem Steckschlüssel, verdreht, so wird der Schlaufendurchmesser des Spannbandes -je nach Drehrichtung- verkleinert oder vergrößert, das heißt, die Schlauchschelle wird festgespannt oder gelöst.

Unabhängig vom Einsatzgebiet der Schlauchschellen besteht der Wunsch, die mit einer bestimmten Spannkraft angezogene Schlauchschelle gegen unbefugtes Verstellen zu sichern. Dies ist insbesondere dann wichtig, wenn das Festspannen mit einem bestimmten Anzugsmoment der Spannschnecke der Spannvorrichtung erfolgt ist, so daß ein Lösen und möglicherweise anschließend erfolgendes Wiederfestziehen zu einer zu losen oder aber zu festen Verbindung führt. In beiden Fällen ist die Sicherheit einer korrekten, belastbaren Verbindung nicht mehr gewährleistet. Dies kann zu weitreichenden Folgen führen.

Bei der oben erwähnten bekannten Schlauchschelle der GB 2 246 160A ist die Spannschnecke innerhalb eines Gehäuses untergebracht und nur durch eine kleine Öffnung des Gehäuses zugänglich und mit einem Spezialwerkzeug verstellbar. Zugriffsversuche auf die Schnecke mit ungeeignetem Werkzeug sind aber nicht ausgeschlossen.

Der Erfindung liegt daher die Aufgabe zugrunde, eine Schlauchschelle der eingangs genannten Art zu schaffen, deren Spannschnecke bereits vor dem Versuch einer unbefugten Verstellung geschützt ist.

Diese Aufgabe wird erfindungsgemäß durch eine Zugriffssicherung gelöst, die als eine auf die Spannvorrichtung aufclipsbare Abdeckung ausgebildet ist. Im aufgeclipsten/aufgeschnappten Zustand der Abdekkung wird die Spannschnecke der Spannvorrichtung überfangen, so daß einerseits ein Sichtschutz vorliegt und andererseits an der Spannschnecke zu deren Verdrehen vorgesehene Eingriffsmittel für ein Werkzeug oder dergleichen abgedeckt sind. Da somit dem Nichtfachmann schon bei optischer Prüfung aufgrund der Abdeckung keine Verstellmittel der Schlauchschelle auffallen, wird dieser den Versuch, die Schlauchschelle fester anzuziehen oder zu lösen, gar nicht unternehmen. Da ihm auch keine Eingriffsmittel zum Ansetzen eines Werkzeugs auffallen, mit denen er die Spannschnecke verdrehen könnte, wird er von einem möglichen Vorhaben, an der Schlauchschelle zu manipulieren, absehen. Aufgrund der nur aufgeclipst an der Spannvorrichtung gehaltenen Abdeckung ist es andererseits jedoch für einen Fachmann auf einfache Weise möglich, die Abdeckung zu entfernen, so daß er Zugang zur Spannschnecke erhält und in autorisierter Art und Weise ein Lösen oder Festziehen des Spannbands vornehmen kann. Nach Durchführung seiner Arbeiten clipst der Fachmann die Abdeckung wieder auf die Spannvorrichtung auf, so daß die Zugriffssicherung wieder besteht.

Nach einer Weiterbildung der Erfindung ist vorgesehen, daß die Abdeckung als Blechbiegeteil ausgebildet ist. Sie wird vorzugsweise einstückig im Stanz-Biegeverfahren hergestellt. Als Material bietet sich Stahlblech bevorzugt an.

Vorzugsweise ist vorgesehen, daß die Abdeckung mit einem Haltekragen den Kopf der Spannschnecke hintergreift. Der Haltekragen ist bevorzugt an einem Ende der Abdeckung ausgebildet. Am anderen Ende der Abdeckung befindet sich insbesondere ein Haltesteg, der ein Spannschnecken-Lagergehäuse oder die Spannschnecke selbst hintergreift. Es ist auch möglich, daß der Haltekragen und/oder der Haltesteg eine Kante der Spannvorrichtung, insbesondere dessen Grundgehäuse und/oder dessen Spannschnecken-Lagergehäuse, hintergreift. Durch Haltekragen und Haltesteg läßt sich die Abdeckung auf einfache Weise sicher an der Spannvorrichtung befestigen. Hierzu wird die Abdeckung dem Spannschnecken-Lagergehäuse beziehungsweise der Spannschnecke derart zugeführt, daß zuerst der Haltesteg in den erwähnten Hintergriff gelangt. Anschließend wird dann die Abdeckung derart verschwenkt, daß ihr Haltekragen hinter den Kopf der Spannschnecke schnappt. Damit ist eine sichere Befestigung gewährleistet. Selbstverständlich kann auch in umgekehrter Reihenfolge vorgegangen werden, so daß zunächst der Haltekragen in Hintergriffsposition zur Spannschnecke, insbesondere zum Kopf der Spannschnecke, gebracht wird und daß anschließend die Festlegung mittels des Haltestegs erfolgt. Wenn für die Abdeckung ein elastisches Material, beispielsweise ein biegbares Blech oder dergleichen, verwendet wird, so können durch Materialverformung Haltekragen und/oder Haltesteg beim Aufclipsen auf die Spannvorrichtung ausfedern und -beim Erreichen der Endposition- in Hintergriffsstellung schnappen. Insbesondere ist die Abdeckung -im Schnitt ihrer Längserstreckung betrachtet- als C-Profil gestaltet, wobei die Endstücke des C's den Haltekragen und den Haltesteg bilden. Um den Kopf der Spannschnecke abzudecken, so daß er von außen nicht oder bei nicht vollständiger Abdeckung nur schwerlich sichtbar ist, sind bevorzugt im Bereich des Haltekragens einstückig vom C-Profil abgebogene Abdecklappen an der Abdeckung ausgebildet, so daß der Kopf der Spannschnecke seitlich -also in bezug auf die Drehachse der Spannschnecke auf einander diametral gegenüberliegenden Seiteabgedeckt ist. Die Abdecklappen verbessern die Abschirmwirkung und damit die Zugriffssicherung der Spannschnecke der Schlauchschelle.

Schließlich ist vorgesehen, daß die Tiefe des C-Profils derart ausgestaltet ist, daß es zwischen die Schenkel eines, das Spannschnecken-Lagergehäuse aufnehmenden, U-förmigen Grundgehäuses der Spannvorrichtung einsetzbar ist. Hierdurch nimmt die Abdeckung oder ein Teil von ihr eine Position innerhalb des U-förmigen Grundgehäuses ein, wodurch eine zusätzliche Haltewirkung erzielt ist und die Abdeckung gegenüber einem unbeabsichtigten Verschieben -quer zur Drehachse der Spannschnecke- gesichert ist.

Die Zeichnungen veranschaulichen die Erfindung anhand von Ausführungsbeispielen und zwar zeigt:
- Figur 1: eine perspektivische Ansicht einer erfindungsgemäßen Schlauchschelle und
- Figur 2: einen Längsschnitt durch die Schlauchschelle der Figur 1.

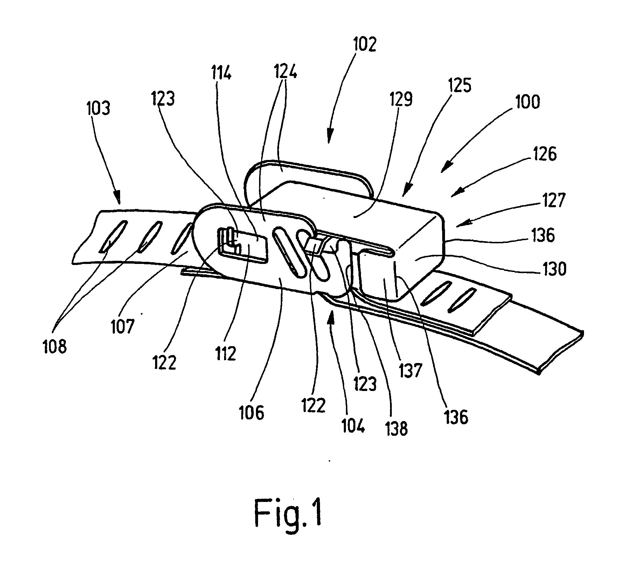

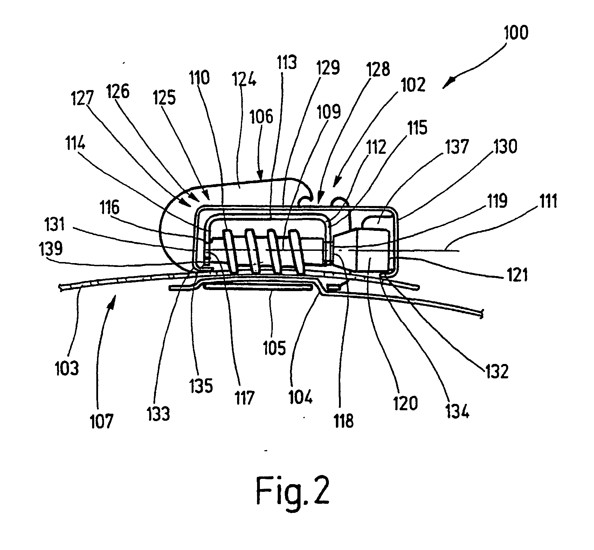

Die Figuren 1 und 2 zeigen eine erfindungsgemäße Schlauchschelle 100, die eine Spannvorrichtung 102 und ein Spannband 103 aufweist. Das Spannband 103 ist mit seinem einen Endbereich 104 am Boden 105 eines U-förmigen Grundgehäuses (Spanngehäuse) 106 befestigt. Ferner ist es -ausgehend von dem Endbereich 104- schlaufenförmig ausgebildet (nicht dargestellt), so daß der andere Endbereich 107 im Bereich der Spannvorrichtung 102 auf dem Endbereich 104 zu liegen kommt. Der Endbereich 107 ist mit Schlitzdurchbrüchen (Mitnahmeausnehmungen) 108 versehen, in die eine, der Spannvorrichtung 102 angehörende Spannschnecke 109 eingreifen kann. Die Spannschnecke 109 weist hierzu einen wendelförmigen Gewindesteg 110 auf. Die Spannschnecke 109 ist um ihre Drehachse 111 drehbar in der Spannvorrichtung 102 gelagert. Hierzu ist ein Spannschnecken-Lagergehäuse 112 vorgesehen, das -rechtwinklig zur Längserstreckung der Drehachse 111- einen U-förmigen Querschnitt aufweist, so daß ein Mittelsteg 113 sowie zwei rechtwinklig hierzu abgebogene Schenkel 114 und 115 vorliegen. Im Schenkel 114 befindet sich eine Aufnahmeöffnung 116, in der der eine Endbereich 117 der Spannschnecke 109 drehbeweglich lagert. Eine Taille 118 der Spannschnecke 109 ist in einer Aufnahmeöffnung 119 des Schenkels 115 drehbeweglich gelagert. Jenseits der Taille 118 befindet sich ein außerhalb des U-förmigen Spannschnecken-Lagergehäuse 112 gelegener Kopf 120 der Spannschnecke 109, der an seiner Stirnfläche 121 nicht dargestellte Werkzeugaufnahmemittel aufweist, beispielsweise einen Schlitz für einen Schraubendreher oder aber eine Mehrkantöffnung für ein Mehrkant-Bit. Es ist auch möglich, daß der Kopf 120 einen Mehrkantumfang für einen Mehrkantsteckschlüssel aufweist.

Das Spannschnecken-Lagergehäuse 112 ist mittels Lagerlappen 122 in Ausnehmungen 123 des Grundgehäuses 106 derart gelagert, daß der Gewindesteg 110 der Spannschnecke 109 in die zugeordneten Schlitzdurchbrüche 108 des Spannbands 103 eingreift. Im rechtwinklig zur Längserstreckung der Drehachse 111 verlaufende Querschnitt ist das Grundgehäuse 106 ebenfalls U-förmig ausgestaltet, wobei der Mittelsteg von dem bereits erwähnten Boden 105 gebildet wird, von dem einstückig abgebogen zwei Schenkel 124 ausgehen, in die die Ausnehmungen 123 eingebracht sind. Da zwei der einander diametral gegenüberliegenden Ausnehmungen 123 randoffen ausgebildet sind, läßt sich -für eine schnellere Montage beziehungsweise Demontage- das Spannschnecken-Lagergehäuse 112 zusammen mit der Spannschnecke 109 derart verschwenken, daß der Gewindesteg 110 aus den Schlitzdurchbrüchen 108 austritt beziehungsweise in diese eingreift. In den Figuren 1 und 2 ist die Eingriffsstellung der Spannschnecke 109 in die Schlitzdurchbrüche 108 gezeigt.

Ist die Schlauchschelle 100 an einen nicht dargestellten Gegenstand montiert, so wird sie durch Drehen der Spannschnecke 109 mittels eines geeigneten Werkzeugs oder dergleichen festgespannt, bis sich die gewünschte Zugkraft einstellt. Um die montierte Stellung gegenüber Manipulationen zu sichern, wird der Spannvorrichtung 102 eine als Abdeckung 125 ausgebildete Zugriffssicherung 126 zugeordnet. Diese besteht aus einem einstückig ausgebildeten Blechbiegeteil 127, vorzugsweise aus Stahlblech. Rechtwinklig zur Längserstreckung der Drehachse 111 betrachtet, weist die kappenartige Abdeckung 125 ein C-Profil 128 auf, das einen Mittelsteg 129 aufweist, von dem beidseitig Schenkel 130 und 131 vorzugsweise rechtwinklig abgebogen sind, von denen wiederum jeweils Endstücke 132 und 133 aufeinander zu abgebogen sind. Das Endstück 132 bildet einen Haltekragen 134; das Endstück 133 stellt einen Haltesteg 135 dar. Von den Seitenrändern 136 des Schenkels 130 sind Abdecklappen 137 derart abgebogen, daß sie -in der auf die Spannvorrichtung 102 aufgeschnappten Stellung der Abdeckung 125- den Kopf 120 der Spannschnecke 109 abdecken. Die Länge der Abdecklappen 137 ist derart gewählt, daß nur ein geringer Abstand bis zur jeweiligen Randkante 138 des jeweils zugehörigen Schenkels 124 des Grundgehäuses 106 besteht.

Insbesondere der Figur 2 ist zu entnehmen, daß die Rasthalterung der Abdeckung 125 an der Spannvorrichtung 102 dadurch realisiert ist, daß der Haltekragen 134 den Kopf 120 der Spannschnecke 109 hintergreift und daß der Haltesteg 135 unter die Endkante 139 des Schenkels 114 des Spannschnecken-Lagergehäuses 112 greift. Der Haltesteg 135 greift somit in einen Schlitz zwischen der genannten Endkante 139 und der Oberseite des dort liegenden Spannbands 103 ein. Da das Blechbiegeteil 127 eine Elastizität aufweist, da beispielsweise der Mittelsteg 113 federnd nachgiebig ist und/oder die beiden Schenkel 130 und 131 seitlich nach außen auffedern können, ist es möglich, die Abdeckung 125 durch elastisches Aufbiegen von der Spannvorrichtung 102 abzunehmen beziehungsweise diese beim Aufstecken schnappend zu verrasten.

Da der Kopf 120 der Spannschnecke 109 mehrseitig umfangen wird, ist es für einen Laien nicht ohne weiteres möglich, die Spannschnecke bei aufgerasteter Abdeckung 125 zu drehen, wodurch eine Zugriffssicherung realisiert ist. Die Stirnfläche 121 des Kopfs 120 wird vom Schenkel 130 überfangen. Die beiden Seitenbereiche des Kopfs 120 werden von den beiden Abdecklappen 137 abgedeckt. Die Oberseite des Kopfs 120 wird von einem Teil des Mittelstegs 129 des C-Profils 128 abgedeckt. Vorzugsweise ist vorgesehen, daß sich im montierten Zustand der Abdeckung 125 die Innenseite ihres Mittelstegs 129 an der Außenseite des Mittelstegs 113 des Spannschnecken-Lagergehäuses 112 anlegt oder daß ein nur geringer Abstand zwischen den Teilen besteht. Dieser geringe Abstand besteht ebenfalls zwischen den Schenkeln 114 und 131 sowie dem Schenkel 130 und der Stirnfläche 121 des Kopfs 120.

## Patentansprüche

1. Schlauchschelle mit einem Spanngehäuse (106), in dem eine Spannschnecke (109) einer Spannvorrichtung (102) drehbar lagert, wobei die Spannschnecke (109) mit ihrem Gewindesteg in Mitnahmeausnehmungen (108) eines Endbereichs (107) eines Spannbands (103) eingreift, dessen anderer Endbereich (104) am Spanngehäuse (106) befestigt ist, und mit einer Zugriffssicherung (126) für die Spannschnecke (109), **dadurch gekennzeichnet, daß** die Zugriffssicherung (126) als eine auf die Spannvorrichtung (102) aufclipsbare Abdeckung (125) ausgebildet ist.

2. Schlauchschelle nach Anspruch 1, **dadurch gekennzeichnet, daß** die Abdeckung (125) als Blechbiegeteil (127) ausgebildet ist.

3. Schlauchschelle nach einem der vorhergehenden Ansprüche, **dadurch gekennzeichnet, daß** die Abdekkung (125) einstückig ausgebildet ist.

4. Schlauchschelle nach einem der vorhergehenden Ansprüche, **dadurch gekennzeichnet, daß** die Abdekkung (125) mit einem Haltekragen (134) den Kopf (120) der Spannschnecke (109) hintergreift.

5. Schlauchschelle nach einem der vorhergehenden Ansprüche, **dadurch gekennzeichnet, daß** die Abdekkung (125) mit einem Haltesteg (135) ein Spannschnecken-Lagergehäuse (112) hintergreift.

6. Schlauchschalle nach den Ansprüchen 4 und 5, **gekennzeichnet**, daß der Haltekragen (134) an dem einen Ende der Abdeckung (125) und daß der Haltesteg (135) an dem anderen Ende der Abdeckung (125) ausgebildet ist.

7. Schlauchschelle nach einem der vorhergehenden Ansprüche, **dadurch gekennzeichnet, daß** die Abdekkung (125) -im Schnitt ihrer Längserstreckung betrachtet- als C-Profil (128) ausgebildet ist.

8. Schlauchschelle nach Ansprüch 7, soweit von Ansprüch 4 abhängig, **dadurch gekennzeichnet, daß** im Bereich des Haltekragens (134) einstückig vom C-Profil (128) abgebogene Abdecklappen (137) für die Abschirmung des Kopfes (120) der Spannschnecke (109) ausgebildet sind.

9. Schlauchschelle nach Ansprüch 7, soweit von Ansprüch 4 abhängig, , **dadurch gekennzeichnet, daß** die Tiefe des C-Profils (128) derart ausgebildet ist, daß es zwischen die Schenkel (124) eines, das Spannschnecken-Lagergehäuse (112) aufnehmenden, U-förmigen Grundgehäuses (106) der Spannvorrichtung (102) einsetzbar ist.

## Claims

1. A hose clamp comprising a tightening housing (106) in which a tightening screw (109) of a tightening device (102) is rotatably mounted, the tightening screw (109) having its thread engaging in entraining openings (108) of an end portion (107) of a tightening band (103), the other end portion (104) of which is fixed to the tightening housing (106), and an access guard (126) for the tightening screw (109), **characterised in that** the access guard (126) is formed as a cover (125) adapted to be snapped on the tightening device (102).

2. The hose clamp of claim 1, **characterised in that** the cover (125) is formed as a bent sheet metal part (127).

3. The hose clamp of any preceding claim, **characterised in that** the cover (125) is formed as a single piece.

4. The hose clamp of any preceding claim, **characterised in that** the cover (125) has a retaining collar (134) engaging behind the head (120) of the tightening screw (109).

5. The hose clamp of any preceding claim, **characterised in that** the cover (125) has a retaining web (135) engaging behind a bearing case (112) of the tightening screw.

6. The hose clamp of claims 4 and 5, **characterised in that** the retaining collar (134) is formed at one end of the cover (125) and the retaining web (135) is formed at the other end of the cover (125).

7. The hose clamp of any preceding claim, **characterised in that** the cover (125) - as viewed in its longitudinal section - is formed as a C-profile (128).

8. The hose clamp of claim 7 as dependent on claim 4, **characterised in that** covering lugs (137) are integrally bent from the C-profile (128) within the area of the retaining collar (134) for covering the head (120) of the tightening screw (109).

9. The hose clamp of claim 7 as dependent on claim 4, **characterised in that** the C-profile (128) has such a depth that it can be inserted between the legs (124) of a U-shaped basic housing (106) of the tightening device (102) accommodating the bearing case (112) of the tightening screw.

## Revendications

1. Collier de serrage comportant un boîtier de serrage (106) dans lequel est montée tournante une vis de serrage (109) d'un dispositif de serrage (102), la vis de serrage (109) s'engageant par son âme filetée dans des évidements d'entraînement (108) d'une zone d'extrémité (107) d'une bande de serrage (103) dont l'autre zone d'extrémité (104) est fixée au boîtier de serrage (106), et comportant une protection contre l'accès (126) pour la vis de serrage (109), **caractérisé en ce que** la protection contre l'accès (126) est réalisée sous la forme d'un capot (125) qui peut être clipsé sur le dispositif de serrage (102).

2. Collier de serrage selon la revendication 1, **caractérisé en ce que** le capot (125) est réalisé sous la forme d'une pièce cintrée en tôle (127).

3. Collier de serrage selon l'une des revendications précédentes, **caractérisé en ce que** le capot (125) est réalisé d'un seul tenant.

4. Collier de serrage selon l'une des revendications précédentes, **caractérisé en ce que** le capot (125) passe derrière la tête (120) de la vis de serrage (109), par une collerette de retenue (134).

5. Collier de serrage selon l'une des revendications précédentes, **caractérisé en ce que** le capot (125) passe derrière un boîtier (112) de support de la vis de serrage, par une barrette de retenue (135).

6. Collier de serrage selon les revendications 4 et 5, **caractérisé en ce que** la collerette de retenue (134) est réalisée à une extrémité du capot (125) et **en ce que** la barrette de retenue (135) est réalisée à l'autre extrémité du capot (125).

7. Collier de serrage selon l'une des revendications précédentes, **caractérisé en ce que** le capot (125) - vu en coupe dans le sens de sa longueur - est réalisé comme profilé en C (128).

8. Collier de serrage selon la revendication 7, dans la mesure où elle dépend de la revendication 4, **caractérisé en ce que** dans la zone de la collerette de retenue (134) sont réalisés d'un seul tenant des clapets de couverture (137), repliés du profilé en C (128), pour la protection de la tête (120) de la vis de serrage (109).

9. Collier de serrage selon la revendication 7, dans la mesure où elle dépend de la revendication 4, **caractérisé en ce que** la profondeur du profilé en C (128) est telle qu'il peut être inséré entre les branches (124) d'un boîtier de base (106) en U, recevant le boîtier (112) de support de la vis de serrage, du dispositif de serrage (102).
